Europäisches Patentamt

European Patent Office

Office européen des brevets

(11) Publication number: **0 050 466**
**A1**

# (12) EUROPEAN PATENT APPLICATION

(21) Application number: **81304765.1**

(22) Date of filing: **13.10.81**

(51) Int. Cl.³: **F 16 K 31/528**

(30) Priority: **22.10.80 US 199411**

(43) Date of publication of application: **28.04.82**
**Bulletin 82/17**

(84) Designated Contracting States: **BE DE FR GB IT NL**

(71) Applicant: **THE DURIRON COMPANY, INC., P.O. Box 1145, Dayton Ohio 45401 (US)**

(72) Inventor: **Howard, Robert Louis, Route 1 Box 56a, Sparta Tennessee 38583 (US)**
Inventor: **Bowers, David Lamarr, Route 10 Box 313, Cookeville Tennessee 38501 (US)**

(74) Representative: **Warren, Anthony Robert et al, BARON & WARREN 18 South End Kensington, London W8 5BU (GB)**

(54) **Rotary valve actuator.**

(57) A rotary valve actuator (10) is used with a valve (68) having a valve body and a socketed valve stem (66) and includes a body (12) having an inner surface (26) defining a cavity (28) therethrough and at least one longitudinal guideway (30, 32) formed in the inner surface, a hollow cylindrical sleeve (14) rotatably mounted within the cavity and having at least one helical slot (56, 58) therethrough, a drive socket (64) mounted on a lower end of the sleeve for engaging the socketed valve stem, a cam follower (16) extending through and slidably engaging the helical slot and slidably engaging the guideway, and a shaft (18) extending through the hollow sleeve and rigidly connected to the cam follower. Displacement of the shaft (18) within the cylindrical sleeve (14) causes the cam follower (16) to slide along the fixed guideway (30, 32) of the body and the helical slot (56, 58) of the sleeve thereby causing the sleeve to rotate relative to the body and turn the valve stem (66) to actuate the valve (68).

## ROTARY VALVE ACTUATOR

The present invention relates to valve actuators, and more particularly to valve actuators which convert a linear input motion to a rotary output motion.

There are many devices known in the art for automatically opening and closing valves. Since most industrial valves are in an environment in which sources of hydraulic or pneumatic power are readily available, it is desirable to utilize a valve actuator which is pneumatically or hydraulically operated. Typically, such valve actuators are constructed to allow pressurized fluid to enter an expandable chamber to drive a piston which ultimately opens and closes the valve. Thus, these types of rotary valve actuators convert the linear motion of the piston into a rotary motion of the valve stem.

For example, U.S. Pat. No. 3,450,832 discloses a valve actuator in which a piston is powered by pneumatic pressure to displace a stem carrying a pin which slides within a helical slot formed in an upper portion of an enclosing housing. A valve stem which controls the position of the valve telescopes into the upper portion of the stem and slidably engages it although it is prevented from twisting relative to the stem by means of a pin and slot arrangement. Thus, as the stem moves upward toward the valve body, the stem is twisted as the pin slides within the helical slot and the twisting motion is transferred to the valve stem which, in turn, actuates the valve. This device has a disadvantage in that the torque or twisting force of the actuator is concentrated at the ends of the housing surrounding the stem and piston. Thus, if the valve jams or is difficult to operate, the housing itself will twist in response to the force exerted by the pin against the helical slot.

Another example of a valve actuator is disclosed in U.S. Pat. No. 3,319,925. A pneumatic cylinder drives a piston having helical slots formed in its walls toward the valve body. The interior walls of the cylinder have plugs which extend inwardly and engage the helical slots of the piston so that the piston twists as it moves toward the valve body. A valve stem, which extends the length of the cylinder, has plugs extending therefrom which engage a second set of helical slots in the wall of the clyinder. As the cylinder moves toward the valve body in response to the pneumatic pressure, the valve stem is twisted thereby actuating the valve. This valve design has a disadvantage in that much of the pneumatic force is diverted to overcome the frictional engagement of the piston with the walls of the cylinder and the frictional engagement of the valve stem with the piston. These contacting surfaces must be properly sealed to prevent leakage of pressurized air which also would reduce the efficiency of the valve actuator.

Another example of a valve actuator is disclosed in U.S. Pat. No. 2,998,805. Pressurized air enters into a chamber to drive a piston toward the valve body. The piston has helical grooves in its walls and a recess which receives a stem which engages the valve socket. The stem has a pin which engages the helical grooves in the cylinder so that, as the cylinder is urged toward the valve body by the pressurized air, the movement of the helical slots against the pin causes the stem and socket to turn thereby actuating the valve. To prevent rotation of the piston, a key is formed in an outer wall of the piston which engages a slot formed in the inner wall of a surrounding internal chamber of the housing of the piston. A disadvantage exists with this type of valve actuator in that much of the energy contained in the pressurized air is required to overcome the frictional forces of the piston against the cylinder wall and the friction of the stem against the valve socket.

Accordingly, there is a need for a rotary valve actuator in which pneumatic or hydraulic pressure is used to expand linearly to generate a rotational motion to actuate a valve. The valve actuator must be designed to minimize friction caused by the engagement of internal surfaces which reduces the efficiency and output torque of the valve actuator.

The actuator embodying the present invention converts linear motion generated by a variety of sources, including the linear expansion movement of hydraulic and pneumatic devices, into rotational motion capable of opening and closing a valve. The actuator is designed to eliminate the need for a moving piston which would divert a portion of the energy released in the expansion of the working fluid to overcome the frictional engagement of the piston and its enclosing cylinder. Instead, the actuator contains two moving parts encased in a body such that the points of contact are separated by thrust bearings or consist of cam follower bearings moving within slots, all of which can be lubricated to minimize friction.

In addition, the actuator embodying the present invention is much simpler to fabricate and assemble, resulting in a product that is less expensive and easier to maintain than prior art valve actuators. Only three components make up the valve actuator embodying the present invention and close tolerances are not required in the machining of these parts since there are no pistons moving within cylinders that require air tight or fluid tight seals.

According to one embodiment of the present invention, a rotary valve actuator is adapted to be used in combination with a conventional valve having a valve body and a socketed valve stem. It preferably consists of a hollow cylindrical body having an inner surface defining a cavity, a hollow cylindrical sleeve rotatably mounted within the cavity, and a cam follower located within the sleeve and mounted on the end of a shaft. The sleeve terminates in a drive socket extending from the lower end of the body which engages the socketed valve stem. The body has a pair of opposing longitudinal guideways and the sleeve has a pair of opposing slots formed in its wall in the shape of a double helix.

The cam follower consists of a T-block having two opposing cam follower bearings, each extending through a helical slot in the sleeve and a longitudinal guideway in the body. Thus, linear movement of the shaft causes the cam follower bearings to slide within the helical slots of the cylindrical sleeve and also to slide along the longitudinal guideways formed in the body of the actuator. Since the cam follower is prevented from twisting by its engagement with the longitudinal guideways, the cylindrical sleeve is caused to rotate within the body thereby twisting the drive socket which, in turn, twists the socketed valve stem to actuate the valve.

To reduce friction, the body has a lower end defining a lower body bearing surface and a cap mounted on an upper end defining an upper body bearing surface. The sleeve mounted within the cavity includes a lower end having a lower shoulder and an upper end having an upper shoulder. Thrust bearings are positioned between the lower shoulder of the sleeve and the lower body bearing surface of the hollow body, and between the upper shoulder of the sleeve and the upper body bearing surface of the cap. In this fashion, both in the forward and return strokes of the cam follower, the hollow cylinder is urged toward and turned against a set of thrust bearings.

Preferably, the valve actuator of the present invention is mounted within a cylindrical housing which includes a rolling diaphragm. A cup-shaped piston has a recess which is sized to receive the cylindrical body of the actuator and has a bottom which forms a movable surface of the diaphragm. The shaft to which the cam follower is attached is mounted to the bottom of the piston so that expansion of the diaphragm causes the piston to move which drives the cam follower by means of the connecting shaft. In the preferred embodiment, the outer housing contains a flange which is positioned about the lower end of the cylindrical body of the actuator and a coil spring extends between the flange and the bottom of the piston. The coil spring is under compression so that it may drive the piston away from the cylindrical body of the actuator for the return stroke of the cam follower.

The valve actuator embodying the present invention is also suited for operation by a double-acting cylinder. In such an application, the shaft of the valve actuator becomes the cylinder rod of a double-acting cylinder so that movement of the piston within the cylinder causes the shaft, and hence the cam follower, to move within the valve actuator to rotate the valve stem.

The valve actuator is also suited for use with linear electric power mechanisms as an alternative to electrohydraulic power combinations. Such electric mechanisms as linear motors or axial solenoids of the type shown in U.S. Pat. No. 4,044,324 may be used to displace the shaft of the valve actuator.

In order to broaden the range of valves to which a particular valve actuator of the present invention is applicable, structure can be added to allow the amount of rotation of the drive socket to be varied according to the individual requirements of the valve to which the actuator is attached. In this embodiment, an annular collar is mounted on the drive socket and extends beyond the end of the cylindrical body of the valve actuator. The collar includes a wedge-shaped portion which forms two opposing radial surfaces which extend beyond the periphery of the collar. A pair of threaded bolts are positioned adjacent the collar so that an end of each bolt may engage an opposing radial surface thereby limiting the rotational movement of the collar and hence the drive socket. The opposite end of the bolts are threaded into blocks which are mounted on the end of the cylindrical body. By threading the bolts into and out of the blocks, the amount of rotational movement of the collar, and thus the amount of rotational movement of the drive socket, can be varied.

Accordingly, it is an object of the invention to provide a valve actuator which converts linear motion into rotational motion without need of a moving piston within the actuator; a valve actuator which has few moving parts so that friction losses can be minimized; a valve actuator which has few components so that fabrication costs can be minimized; a valve actuator in which frictional surfaces are separated by bearings thereby eliminating the need for expensive machining operations; and, a valve actuator which can be adapted to actuate a variety of valves having different requirements for the amount of rotation of the valve stem.

Other objects and advantages of the invention will be apparent from the following description, the accompaning drawings and the appended claims. In order that the invention may be more readily understood, reference will now be made to the accompaning drawings in which:

Fig. 1 is a side elevation in section of the valve actuator embodying the present invention;

Fig. 2 is an exploded isometric view of the valve actuator of Fig. 1;

Fig. 3 is an end elevation of another embodiment of the invention showing an adjustable stop base plate with two blocks, one of which is shown in section;

Fig. 4 is a side elevation in section of the rotary valve actuator of Fig. 1 mounted within a rolling diaphragm; and

Fig. 5 is a side elevation in section of the rotary valve actuator of Fig. 1 mounted on a double-acting cylinder.

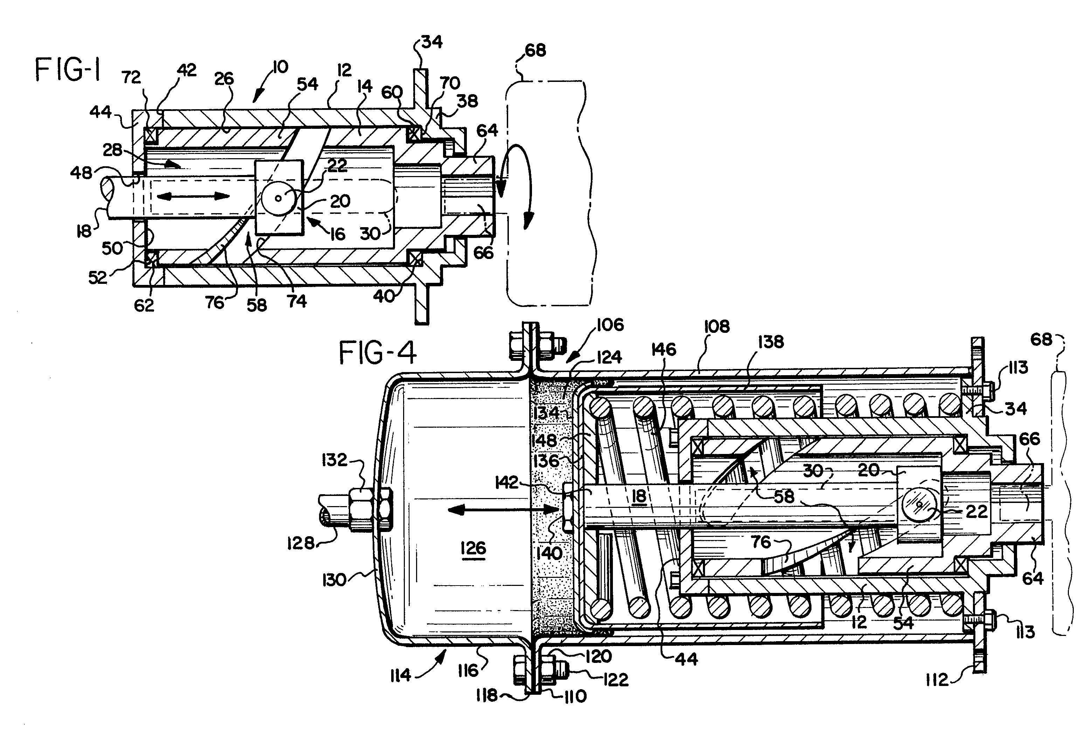

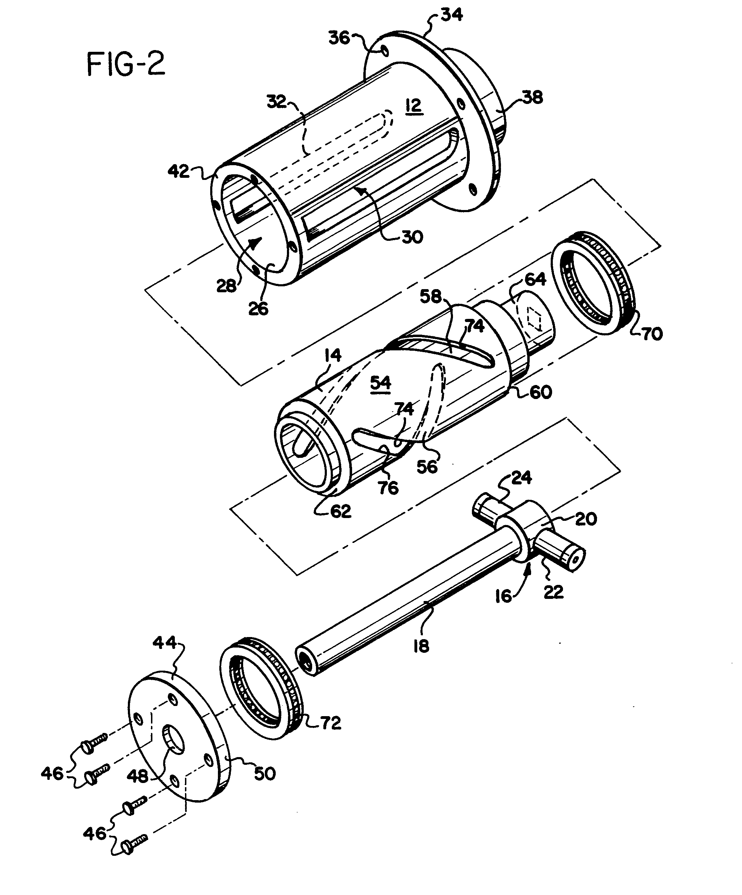

As shown in Figs. 1 and 2, the rotary valve actuator of the present invention, generally designated 10, consists of a body 12, a hollow cylindrical sleeve 14 and a cam follower 16 mounted on the end of a linear shaft 18. The cam follower 16 consists of a T-block 20 which carries two stud-mounted cam follower bearings 22, 24 mounted on opposite sides of the T-block.

The body 12 is generally cylindrical in shape and has an inner surface 26 defining a longitudinal cavity 28 which extends along the body. The body 12 defines two opposing longitudinal guideways 30, 32, each having a width sufficient to receive a cam follower bearing 22 or 24 therethrough. An annular flange 34 having mounting holes 36 is welded to the exterior of the body 12 at a lower end 38. The plurality of mounting holes 36 may be used to bolt the actuator 10 to a mounting bracket (not shown) which, in turn, is attached to a valve body.

The inner surface 26 of the body 12 includes a lower body bearing surface 40 which extends about the circumference of the inner surface adjacent the lower end 38. The upper end 42 of the body 12 is covered by a top cap 44 which is secured to the upper end by bolts 46. The top cap 44 has a central opening 48 through which passes the linear shaft 18. The inner face 50 of the top cap 44 serves as an upper body bearing surface 52.

The sleeve 14 includes a wall 54 forming two opposing helical slots 56, 58 which extend through the wall. The wall 54 of the sleeve 14 includes a lower shoulder 60 and an upper shoulder 62 which serve as bearing surfaces. The lower portion of the sleeve 14 terminates in a female square drive socket 64. The drive socket 64 is sized to receive the corresponding male valve socket 66 which is mounted to a valve stem (not shown) within a valve body 68.

As best shown in Fig. 1, the cavity 28 of the body 12 is sized to receive the sleeve 14 which can be dropped inside the body and then sealed with the top cap 44. The sleeve 14 is separated from the body 12 by means of annular lower thrust bearings 70 and annular upper thrust bearings 72. The lower thrust bearings are positioned between the lower body bearing surface 40 of the body 12 and the lower shoulder 60 of the sleeve 14, while the upper thrust bearing 72 are positioned between the upper body bearing surface 52 of the top cap 44 and the upper shoulder 62 of the sleeve.

The hollow sleeve 14 is sized to receive the cam follower 16 and the cam follower bearings 22, 24 of the cam follower extend from the T-block 20 through the opposing helical slots 56, 58 and opposing longitudinal guideways 30, 32 of the body 12. Thus, as the cam follower 16 is displaced within the sleeve 14, the T-block 20 and cam follower bearings 22, 24 are prevented from rotating by the rolling contact with the opposing longitudinal guideways 30, 32. When an external force acts on the linear shaft 18 to displace the cam follower 16 within the sleeve 14, the T-block 20 is prevented from rotating and the movement of the cam follower bearings 22, 24 against the helical slots 56, 58 of the sleeve 14 causes the sleeve to rotate within the body 12 thereby rotating the female drive socket 64 which then rotates the male drive socket 66 to position the valve stem within the valve body 68.

As the linear shaft 18 is driven inward toward the lower end 38 of the body 12, the cam follower bearings 22, 24 roll against the lower edge 74 of the helical slots 56, 58 of the sleeve 14, thereby causing the sleeve to be driven against the lower body bearing surface 40 of the body. At the same time, the sleeve 14 is being rotated with respect to the body 12. To minimize the frictional engagement of the sleeve 14 against the body 12 during this phase of operation of the actuator 10, the entire force is carried by the lower thrust bearings 70 thereby completely eliminating the existence of sliding friction between the body 12 and the sleeve 14.

Similarly, as the linear shaft 18 is drawn out of the sleeve 14, the cam follower 16 is drawn toward the upper end 42 of the body and the cam follower bearings 22, 24 slide against the upper edge 76 of the helical slots 56, 58 thereby causing the sleeve to rotate in a direction opposite to that previously described. At this time, the sleeve 14 is urged toward the top cap 44 and at the same time turned against the inner face 50. Again, the compressive and torsional forces created are carried entirely by the upper thrust bearings 72, thereby eliminating sliding friction between the sleeve and body.

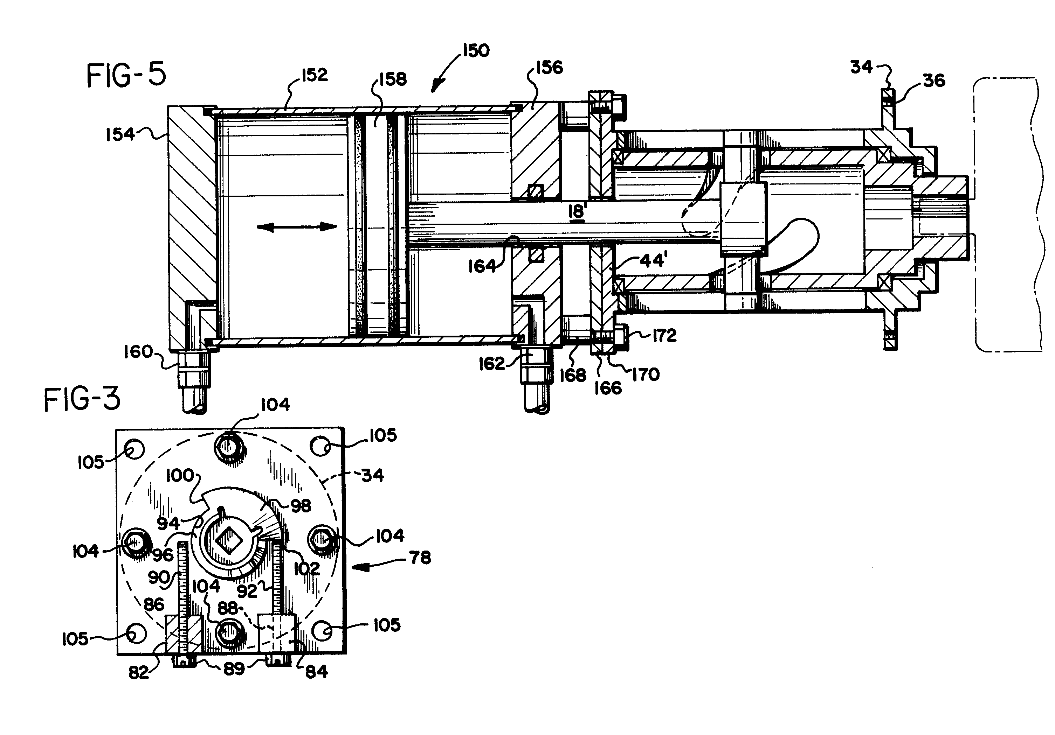

In order to limit the travel of the cam follower 16 within the sleeve 14, and hence the amount of rotation of the sleeve, an adjustable stop base plate, generally designated 78, may be added, as shown in Fig. 3. The stop base plate 78 includes a plate 80 on which is mounted two blocks 82, 84, each having threaded holes 86, 88 therethrough. Threaded bolts 90, 92 are threaded into the holes 86, 88 and extend toward the center of the plate 80. The bolts 90, 92 are slotted at an end for screwdriver adjustment and can be fixed with respect to the blocks 82, 84 by adjusting nuts 89.

The plate has a central opening 94 sized to permit the plate to be fitted over the female drive socket 64 located at the lower end of the sleeve 14. A collar 96 is fitted over the drive socket 64 and held against it by retaining screws (not shown). The collar 96 is generally annular in shape and includes a wedge-shaped portion 98. The wedge-shaped portion 98 includes two opposing surfaces 100, 102 that extend radially from the center of the collar 96. Thus, as the sleeve 14 and drive socket 64 are rotated, the collar 96 is rotated until an opposing face 100 or 102 of the wedge-shaped portion 98 contacts a threaded bolt 90 or 92. The threaded bolts 90, 92 can be threaded into or out of their respective blocks 82, 84 and fixed by nuts 89 to permit the degree of rotation of the drive socket 64 to be varied according to the requirements of the individual valve to which the valve actuator 10 is attached.

Although the stop base plate 78 can be attached to the valve body by any of a number of well-known means, it is shown in Fig. 3 secured to the flange 34 of the body 12 by means of bolts 104 which can be threaded into mounting holes 37 of the flange 36 on the body 12. Therefore, in this particular embodiment, additional means, well-known in the art, would be. required to secure the valve actuator 10 to the valve body. Plate 80 includes mounting holes 105 which would be used to receive bolts from a mounting bracket (not shown) to facilitate mounting to a valve body.

In Fig. 4, the rotary valve actuator 10 is shown mounted within a rolling diaphragm apparatus, generally designated 106. The rolling diaphragm 106 includes an outer housing 108 having an upper flange 110 and a lower flange 112 which is bolted to the flange 34 of the body 12 by bolts 113, and a diaphragm 114.

The diaphragm 114 includes a cup-shaped portion 116 which includes a flange 118 that abuts the upper flange 110 of the outer housing 108. In this fashion, the cup-shaped portion 116 may be secured to the outer housing 108 by nuts 120 and bolts 122. A flexible bladder 124 is clamped between flange 118 and upper flange 110 and serves to enclose a chamber 126 within the diaphragm 114. A flexible hose 128 is mounted in a wall 130 of the cup-shaped portion 116 and is secured by an airtight fitting 132. The flexible hose 128 serves to connect the chamber 126 with a source of compressed air (not shown).

The flexible bladder 124 of the diaphragm 114 is clamped between a retaining plate 134 and the bottom 136 of a cup-shaped piston 138. The plate 134 and plate 136 are clamped together by a bolt 140 which threadedly engages an upper end 142 of the linear shaft 18. A resilient means such as a coil spring 146 is mounted within the piston 138 and extends between the flange 34 of the body 12 and the bottom 136 of the piston. A disk-shaped spacer 148 may be placed adjacent the bottom 136 of piston 138 to prevent excessive wear of the bottom by the spring 146 which may result in damage to the structural integrity of the piston. The spacer would preferably be made from an abrasion resistant material such as steel.

The operation of the rolling diaphragm 106 and the valve actuator 10 is as follows. When the chamber 126 is depressurized, the coil spring 146 has fully extended thereby displacing the piston 138 toward the wall 130 of the cup-shaped portion 116. This in turn has withdrawn the linear shaft 18 from within the sleeve 14 and thereby rotated the sleeve by the movement of the cam follower bearings against the upper edge 76 of the helical slots 56, 58. When the chamber 126 is pressurized by the entry of compressed air through the flexible hose 128, the expansion force of the compressed air drives the piston 138 toward the lower flange 112 of the outer housing 108. This in turn compresses the coil spring 146 and drives the linear shaft 18 into the sleeve 14 thereby causing the sleeve 14 to rotate in a direction opposite to that previously described. Thus, with the use of a diaphragm that is operated by compressed air, the diaphragm can be pressurized at a literally infinite number of pressures so that the female drive socket 64 can be positioned at an inifinite number of settings. In addition, the embodiment of Fig. 4 can incorporate the stop base plate 78 of Fig. 3 which can be bolted to the lower flange 112 of the outer housing 108.

As shown in Fig. 5, the actuator 10 can be controlled by a double-acting cylinder, generally designated 150. The double-acting cylinder 150 can be of conventional design having a cylinder 152. Upper and lower end plates 154, 156 respectively, a piston 158 and upper and lower pressure hose fittings 160, 162 respectively. The hose fittings 160, 162 communicate with a source of compressed air and a control (not shown) well-known in the art.

The linear shaft 18' of the actuator 10 is attached to the piston 158 by conventional means and extends through a port 164 in the lower end plate 156. Thus, the piston 158 of the cylinder 150 is directly linked to the cam follower 16.

The cylinder 150 is mounted to an adapter 166 having raised bosses 168 which may include threaded holes (not shown) to receive bolts (also not shown) extending from the lower end plate 156 in a manner well-known in the art. The adapter 166 is bolted to a modified top cap 44' having a lip 170 by bolts 172.

Thus, as the piston 158 is displaced within the cylinder, linear shaft 18' displaces the cam follower bearing 16 within the sleeve 14 to rotate the sleeve thereby operating the valve. As in the embodiment of Fig. 4, the stop base plate 78 of Fig. 3 may be mounted to the flange 36 of the body 12 to limit the rotational travel of the sleeve 12 to meet the particular requirements of the associated valve.

The rotary valve actuator of the present invention possesses a number of advantages. The valve actuator 10 can be fabricated easily from a gear-type alloy steel which is then hardened and either phosphated or covered with a black oxide coating. The body 12 and the cylindrical sleeve 14, including the female square drive socket 64, can each be cast as a solid piece.

The valve actuator 10 can be assembled easily and is suited for mass production. To assemble the valve actuator 10, the lower thrust bearing 70 is dropped into the body 12 so that it rests upon the lower body bearing surface 40, the sleeve 14 is then placed in the body so that it rests upon the lower thrust bearings 70, the upper thrust bearings 72 are placed upon the upper shoulder 60, the cam follower 16 and linear shaft 18 are positioned within the sleeve, and the body is then sealed with the top cap 44. The stud mounted cam follower bearings 22, 24 is preferably threaded into the T-block 20 through the opposing longitudinal guideways 30, 32 and opposing helical slots 56, 58, and the assembly is completed.

Another advantage lies in the design of the sleeve 14 and body 12 so that all frictional engagement between them is carried by either upper thrust bearing 72 or lower thrust bearing 70. Thus, frictional engagement between the sleeve 14 and body 12 is limited to the rolling friction of the thrust bearings.

Another advantage lies in the ease in which the amount of rotation of the female drive socket 64 can be adjusted. With the addition of the stop base plate 78, the rotation of the drive socket 64 can be adjusted merely by positioning and fixing the threaded bolts 90, 92 with respect to the blocks 82, 84.

While the forms of apparatus herein described constitute preferred embodiments of this invention, it is to be understood that the invention is not limited to these precise forms of apparatus, and that changes may be made therein without departing from the scope of the invention as defined in the appended claims.

## CLAIMS

1.        For use with a valve having a valve body (68) and a socketed valve stem (66), a rotary valve actuator (10) characterized by:

a body (12) having an outer surface and inner surface (26) defining a cavity (28) therethrough and at least one longitudinal guideway (30, 32) formed in said inner surface;

a hollow cylindrical sleeve (14) rotatably mounted within said cavity and having at least one helical slot (56, 58) therethrough;

drive socket means (64) mounted on one end of said sleeve adjacent one end (38) of said body for engaging said socketed valve stem;

cam follower means (16) extending through and engaging said helical slot and said guideway; and

a shaft (18) extending within said hollow sleeve rigidly connected to said cam follower means and adapted to receive means (106 or 150) for displacing said shaft relative to said sleeve so that, as said shaft is displaced, said cam follower means travels along said helical slot and said guideway thereby rotating said cylindrical sleeve and said drive socket means relative to said body.

2.        A rotary valve actuator as claimed in claim 1, further comprising means (90, 92, 98) for limiting the movement of said cam follower means (16) along said slot (56, 58) and said guideway (30, 32), and for limiting the rotation of said cylindrical sleeve (14) relative to said body (12).

3.      A rotary valve actuator as claimed in claim 2, wherein said means for limiting movement of said cam follower means and rotation of said sleeve comprises:

a collar (96) mounted on said drive socket means (64) and extending outwardly of said body, said collar having an annular shape with a wedge-shaped portion (98) forming two opposing radially extending faces (100, 102); and

means (90, 92) mounted on said body to engage said radial faces.

4.      A rotary valve actuator as claimed in claim 3, wherein said means to engage said faces comprises:

first and second bolt means (90, 92) positioned adjacent said collar such that an end of each bolt means may engage a different one of said opposing radial face (100, 102) thereby limiting the movement of said cam follower means (16) and the rotation of said cylindrical sleeve (14); and

at least one block means (82, 84) mounted on said body (12) for threadably engaging said bolt means such that said bolt means are movable relative to said block means thereby permitting movement of said cam follower means and rotation of said cylindrical sleeve to be varied.

5.      A rotary valve actuator as claimed in claim 1, further comprising means (106 or 150) for displacing said shaft relative to said cylindrical sleeve.

6.     A rotary valve actuator as claimed in claim 5, wherein an upper end (142) of said shaft extends out of an upper end (42) of said body (12), said body includes a flange (34) about said outer surface, and said means for displacing said rod comprises:

a generally cup-shaped piston (138) having a recess sized and positioned to receive said body (12), said piston attached to said upper end of said shaft;

resilient means extending between said piston and said flange for urging said piston away from said body; and

a housing (108) enclosing said piston, said housing including a rolling diaphragm (106) adjacent said piston and forming a chamber (126) within said housing such that when said chamber is pressurized said diaphragm urges said piston toward said cylindrical sleeve (14) and said drive socket means (64) is rotated.

7.     A rotary valve actuator as claimed in claim 5, wherein said means for displacing said shaft comprises a double-acting cylinder (150) having piston means (158) and a cylinder (152) enclosing said piston means, and said shaft (18) communicates with said piston means.

8.    For use with a valve having a valve body (68) and a socketed valve stem (66), a rotary valve actuator (10) characterized by:

a cylindrical body (12) having an inner surface (26) defining a longitudinal cavity (28) therethrough and a pair of substantially straight opposing longitudinal guideways (30, 32);

said body having an upper end (42) and a lower end (38), said inner surface proximate said lower end defining a lower body bearing surface (40);

a cap (44) mounted on said upper end forming an upper body bearing surface (52);

a sleeve (14) rotatably mounted but not longitudinally movable within said cavity and concentric thereto, said sleeve having a hollow cylindrical wall (54), a lower end including a lower shoulder (60), an upper end including an upper shoulder (62), said wall defining a pair of opposing helical slots (56, 58) therethrough;

a lower thrust bearing (70) positioned between said lower shoulder and said lower body bearing surface;

an upper thrust bearing (72) positioned between said upper shoulder and said upper body bearing surface;

drive socket means (64) mounted on said lower end of said sleeve adjacent said lower end of said housing for engaging said socketed valve stem;

cam follower means (16) positioned within said sleeves, said cam follower including;

a block means (20);

a pair of stud-mounted cam follower bearings (22, 24) extending from said block means, each cam follower bearing extending through and slidably engaging one of said helical slots and slidably engaging one of said longitudinal guideways; and

a shaft (18) attached at an end to said block means and extending along said hollow sleeve terminating externally of said upper end of said cylinder.

FIG-1

FIG-4

FIG-2

FIG-5

152  158  150  156  34  36

154

18'

164  44'

160  162  168  170  172  166

FIG-3

104  105

105  105

100  98  34

94  96  104  104

90  102  78

86  92

82  88  84  89

105  105

3/3

0050466

# DOCUMENTS CONSIDERED TO BE RELEVANT

| Category | Citation of document with indication, where appropriate, of relevant passages | Relevant to claim |
|---|---|---|
| | AT - B - 346 663 (IPARI SZERELVENY)  * Totality * | 1,2,5-8 |
| | -- | |
| | US - A - 3 370 827 (T.A.STEHLIN)  * Totality * | 1,2,5-8 |
| | -- | |
| | DE - B - 1 300 832 (BATIC S.A.)  * Totality * | 1,2,5,7,8 |
| | -- | |
| | US - A - 3 153 986 (W.F. MITCELL)  * Totality * | 1,2,5,7,8 |
| | ---- | |

**CLASSIFICATION OF THE APPLICATION (Int. Cl.³)**

F 16 K 31/528

**TECHNICAL FIELDS SEARCHED (Int. Cl.³)**

F 15 B 15/00
F 16 K 31/00
F 16 H 15/00
F 16 H 25/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search | Date of completion of the search | Examiner |
|---|---|---|
| VIENNA | 20-01-1982 | ROUSSARIAN |

EPO Form 1503.1  06.78